# EUROPÄISCHE PATENTSCHRIFT

(11) **EP 2 329 584 B1**
(45) Veröffentlichungstag und Bekanntmachung des Hinweises auf die Patenterteilung: **21.11.2012**
(21) Anmeldenummer: 09780209.4
(22) Anmeldetag: 07.07.2009
(51) Int. Cl.: H02K 5/14, B25F 5/00

(54) **HANDWERKZEUGMASCHINE MIT BÜRSTENMOTOR**
HAND POWER TOOL WITH BRUSH MOTOR
MACHINE-OUTIL PORTATIVE À MOTEUR À BALAIS

(30) Priorität: 29.08.2008 DE 102008041716
(43) Veröffentlichungstag der Anmeldung: 08.06.2011
(73) Patentinhaber: Robert Bosch GmbH, 70442 Stuttgart (DE)
(72) Erfinder: ESENWEIN, Florian, 73066 Uhingen-Holzhausen (DE); LUTZ, Manfred, 70794 Filderstadt (DE); SCHOMISCH, Thomas, 70794 Filderstadt (DE)
(86) Internationale Anmeldenummer: PCT/EP2009/058543
(87) Internationale Veröffentlichungsnummer: WO 2010/023008

(56) Entgegenhaltungen:
- EP-A- 1 724 057
- EP-A- 1 911 547
- DE-A1- 10 248 921

## Beschreibung

### Stand der Technik

Die vorliegende Erfindung geht aus von einer Handwerkzeugmaschine nach dem Oberbegriff des Anspruchs 1. Eine solche Handwerkzeugmaschine ist in

EP 1911 547 A2 beschrieben.

Elektro-Handwerkzeugmaschinen werden heute üblicherweise von elektrischen Universalmotoren, d.h. von Kollektor- bzw. Bürsten-Motoren angetrieben. Dabei wird für die Kommutierung Strom vom Stromkabel über Bürsten auf den im Betrieb drehenden Kollektor des Rotors übertragen. Die Bürsten sind im Gehäuse mittels Bürstenhalters räumlich fixiert. Dieser besteht aus einem rechteckigen Schacht, der die rechteckige Bürste axial führt. Er ist mit einer Feder versehen, die die Bürste zum Kollektor hin drückt. Die Bürste nutzt sich an ihrer Kontaktstelle infolge Gleitreibung am Kollektor ab und bewegt sich unter der Wirkung der Feder entsprechend dem Längenverlust durch Abnutzung axial zum Kollektor hin. Dadurch kann der Stromfluss zwischen Kollektor und Bürste aufrechterhalten werden.

Bekannte Elektrohandwerkzeugmotoren sind mit zwei Bürsten versehen und haben daher auch zwei Bürstenhalter, die einzeln im Gehäuse angeordnet sein können oder einander gegenüberliegend auf einer Trägerplatte sitzen, die im Gehäuse fixierbar ist.

Dabei sind Bürstenhalter mit Steckzungen bekannt, mit denen beispielsweise das Bürstenkabel, eine Elektronikeinheit, die Feldspulen usw. elektrisch kontaktierbar sind.

Die Feder ist in Bezug auf die Motorachse hinter oder neben der Bürste angeordnet. Dabei kommen meistens Spiralfeder/Uhrwerksfeder zur Anwendung. Bei anderen Konstruktionen wird eine Druckfeder axial über der Bürste angeordnet. Dies vergrößert die Baulänge der Bürste und durch den radialen Überstand des Deckels des Bürstenhaltersystems den Umfang des Motorgehäuses. Die damit verbundene Komfort- und Sicherheitseinbuße muss in Kauf genommen werden, wenn das Motorgehäuse als Handgriff dient.

### Vorteile der Erfindung

Vorteil der Erfindung mit den Merkmalen des Anspruchs 1 ist, dass bei Verwendung des neuen Bürstenhalters der Bauraum des Motorgehäuses effektiver nutzbar ist und damit die Handwerkzeugmaschine kleiner gebaut werden kann, z.B. mit verringertem Griffdurchmesser und geringerer Länge.

Außerdem kann eine Serviceöffnung des Motorgehäuses am Sitz des neuen Bürstenhalters und auch ihr Deckel relativ klein bemessen sein und zudem ein Schraubdom für die Schraubbefestigung des Deckels angeordnet werden. Je kleiner die Serviceöffnung ist, umso stabiler/steifer ist das damit versehene Motorgehäuse bzw. der Deckel.

Dadurch, dass der erfindungsgemäße Bürstenhalter ein Einzel-Bürstenhalter ist, der individuell, unabhängig von anderen Bürstenhaltern im Gerät montierbar ist und der beispielsweise nicht mit weiteren Bürstenhaltern auf einer gemeinsamen Trägerplatte sitzt, ist die Montage bzw. ein Bürstenwechsel vereinfacht.

Bei geöffnetem Deckel ist der Bürstenhalter frei zugänglich, so dass ohne Demontage weiterer Gerätekomponenten der Federarm abgehoben, die abgenutzte Bürste entnommen und eine neue Bürste eingesetzt werden kann. Damit ist ein Bürstenwechsel und auch ein Bürstenhalterwechsel einfach und bequem zu erledigen.

Der bei Verwendung einer Serviceöffnung für den Deckel nötige mittige Schraubdom begrenzt den Bauraum des Bürstenhalters. Bei konventioneller Bauweise des Bürstenhalters wäre dieser Schraubdom einer sich axial nach hinten erstreckenden Feder im Wege gewesen und hätte so nicht realisiert werden können. Daher wurde erfindungsgemäß die Feder so am Bürstenhalter positioniert dass sie neben dem Schraubdom angeordnet ist. Die mittige Position des Schraubdoms am Gehäuse dient dabei der optimalen Krafteinleitung der Deckelschraube in den Deckel und verhilft der Handwerkzeugmaschine damit zu einer symmetrischen Gestalt und damit intuitiv sicherer Handhabung.

Um die Feder neben dem Schraubendom positionieren zu können, wurde der Schacht des Bürstenhalters aus seiner - gemäß dem Stand der Technik mittigen Position - um einen Winkel α um die Längsachse gedreht bzw. versetzt, damit eine optimale Krafteinleitung der Feder auf die Bürste über die gesamte Bürstenlebensdauer erreicht werden kann. Durch den beschriebenen Winkelversatz des Schachts um die Längsachse kann die Feder neben dem Schraubendom positioniert werden.

Durch die außermittige Positionierung des Schachts verlagern sich auch die Steckkontakte des Bürstenhalters oben, nahe des Gehäuseumfangs zur Mitte und axial weiter nach vorn im Motorgehäuse. Dadurch wird der Bauraum des Gerätes effektiver genutzt und das Gehäuse kürzer und leichter. Weiter können dadurch die elektrischen Anschlußleitungen gekürzt werden und sind leichter montierbar. Bei der erfindungsgemäßen Geräteausführung sind seitlich neben dem Bürstenhalter zwei Öffnungen im Motorgehäuse vorhanden, durch die hindurch bei der Montage der Feldwicklung die Feldleitungen in den hinteren Bereich des Motorgehäuses geführt werden.

Wäre der Schacht des Bürstenhalters nicht seitlich aus der Mittenanordnung und winklig versetzt um dadurch die Steckkontakte näher zur Mittellinie oben auf dem Motorgehäuse hin zu bekommen, hätte das Motorgehäuse im Bereich des Bürstenhalters für die Anordnung einer Serviceöffnung bzw. eines Deckels konstruktiv und herstellungstechnisch mit erheblichem zusätzlichem Aufwand geändert werden müssen, um Stabilität, Festigkeit und Schwingungsverhalten des Motorgehäuses und damit des gesamten Gerätes zu erhalten.

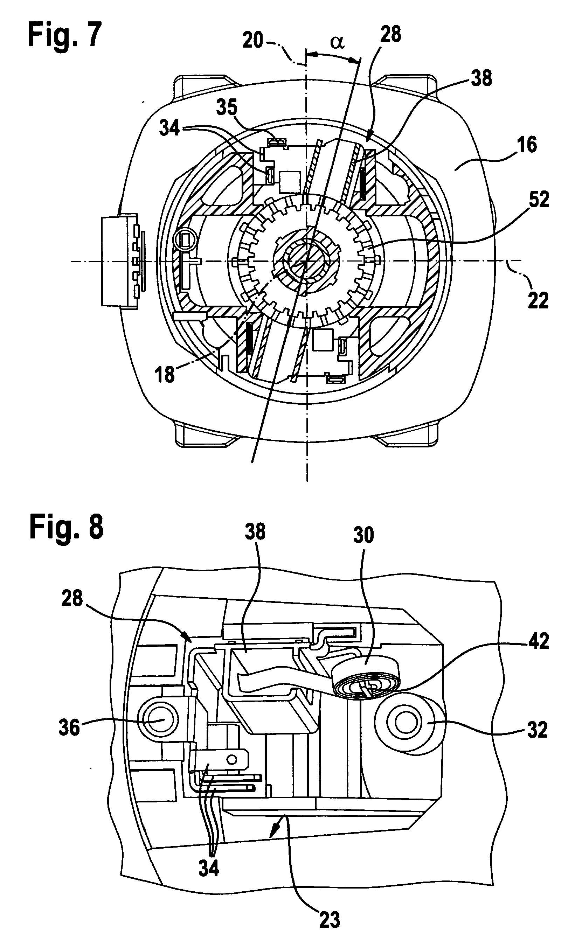

Bei einer weiteren Variante des Bürstenhalters kann neben der Schrägstellung des Schachts die Feder, insbesondere ihre Spiralrolle, geneigt zum Schacht angeordnet werden, siehe Fig. 7. Durch die Schrägstellung der Feder kann diese bei der Montage des Bürstenhalters noch bequemer am Schraubdom vorbeigeführt werden.

Die verbesserte Bauraumausnutzung ist sowohl mit als auch ohne Serviceöffnung gegeben. Durch die Schrägstellung des Schachts sind die Steckkontakte weiter mittig angeordnet sind, wird die Breite des Bürstenhalters insgesamt verringert. Dabei hat der Steckkontakt des Bürstenkabels einen derart reichlichen Abstand zum Schacht, vorzugsweise 8 mm, dass das Bürstenkabel auch bei Alterung und Häufung elektrisch leitenden Staubs nicht zum Sicherheitsrisiko wird, s. Fig. 8.

Die schiefe Anordnung der Bürste bzw. des Schachts des Bürstenhalters bleibt ohne Einfluß auf Herstellung und Montage der Handwerkzeugmaschine, da allein der Bürstenhalter geändert wurde. Die Änderung besteht allein darin, dass der Schacht schiefwinklig statt bisher rechtwinklig an das Trägerblech des Bürstenhalters gefügt ist, insbesondere mit einer Crimp-Verbindung. Dabei ist die Federaufnahme des Bürstenhalters so auszurichten, dass der Federarm mittig im Schacht einliegt und mittig axial beaufschlagend auf die Bürste trifft und für deren mechanisch und elektrisch optimale Abstützung am Kollektor sorgt. Damit ist ein sicherer elektrischer Kontakt bei geringer Reibung zwischen Bürste und Kollektor gewährleistet.

Bei der Montage der Handwerkzeugmaschine bzw. bei Reparaturen kann der Bürstenhalter ohne weiteres von oben durch die Serviceöffnung in das Gerät gesteckt und verschraubt oder anderweitig fixiert werden, z.B. mittels Rastnasen. Er ist damit automatisch unter einem Winkel α angeordnet, ohne dass ein Justieren nötig wäre.

Dadurch dass das Motorgehäuse durch die Erfindung nur so geändert wird, dass die Entformung bei der Herstellung des Motorgehäuses unverändert unter einem 90°-Winkel erfolgt, kann das neue Motorgehäuse ohne Kostenerhöhung hergestelt werden.

### Zeichnung

Nachstehend ist die Erfindung anhand eines Ausführungsbeispiels mit zugehöriger Zeichnung näher erläutert. Es zeigen
- Figur 1: einen erfindungsgemäßen Winkelschleifer mit Serviceöffnung und Deckel
- Figur 2: den Winkelschleifer nach Figur 1 mit offener Serviceöffnung
- Figur 3: eine vergrößerte Seitenansicht der offenen Serviceöffnung nach Fig. 2
- Figur 4: eine Draufsicht auf eine Variante des Bürstenhalters bei geöffnetem Gehäuses
- Figur 5: eine Hinteransicht nach Figur 4
- Figur 6: eine Hinteransicht ähnlich Figur 3 mit mehrfach gebogenem Bürstenkabel
- Figur 7: einen Querschnitt des Motorgehäuses mit Kollektor und Bürstenhalter nach Fig. 2
- Figur 8: eine Variante einer Seitenansicht der offenen Serviceöffnung gemäß Fig. 2 und
- Figur 9a bis f: den Bürstenhalter als Einzelheit in seinen sechs 90°-Seitenprojektionen und in einer perspektivischen Ansicht.

### Ausführungsbeispiel

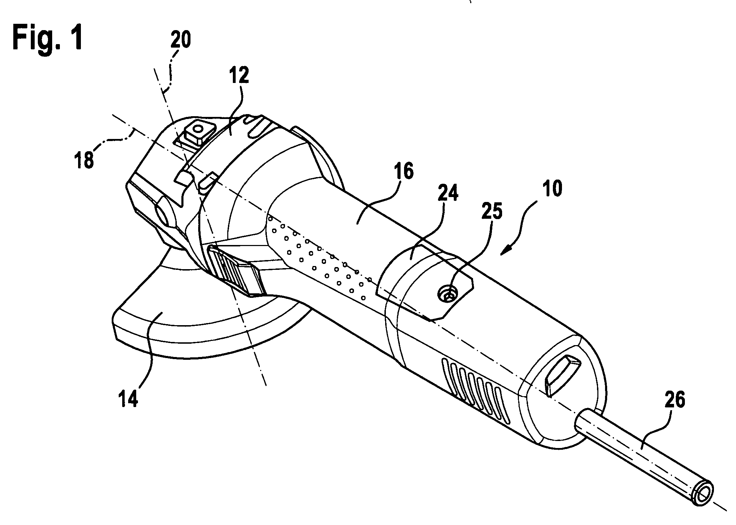

Eine in Figur 1 räumlich dargestellte Handwerkzeugmaschine ist als Winkelschleifer 10 ausgestaltet und hat vorn, in Betrachtungsrichtung links, ein Getriebegehäuse 12, das aus Metall besteht. Aus diesem tritt nach unten, parallel zur Hochachse 20 des Winkelschleifers 10 eine nichtdargestellte Abtriebswelle zur Aufnahme einer nichtdargestellten Schleifscheibe, die von einer Schutzhaube 14 umgriffen wird. Hinten ist an das Getriebegehäuse 12 ein eine Längsachse 18 des Winkelschleifers 10 definierendes Motorgehäuse 16 in Topfbauweise angeflanscht. Dieses nimmt einen für Handwerkzeugmaschinen üblichen Universalmotor, d.h. einen elektrischen Motor 50 (Fig. 7) mit Kollektor 52 auf. Aus dem Motorgehäuse 16 tritt hinten ein Kabel 26 zur Stromversorgung des Motors 50 aus.

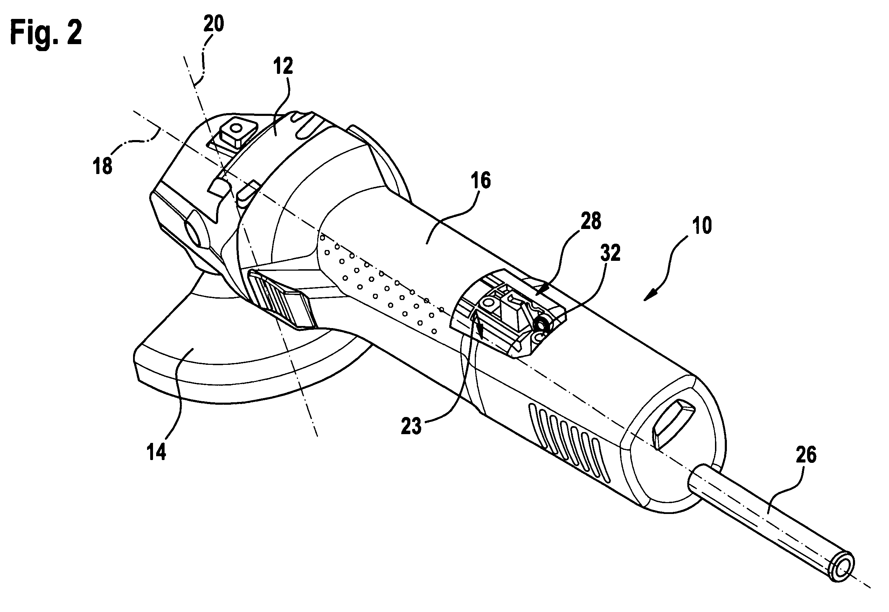

Das Motorgehäuse 16 trägt auf seiner Oberseite mittig einen Deckel 24 einer Serviceöffnung 23 (Fig. 2), der mit einer Deckelschraube 25 konturbündig an das Motorgehäuse 16 geschraubt ist. Diametral entgegengesetzt zum Deckel 24 ist auf der Unterseite des Motorgehäuses 16 - nicht sichtbar- ein gleicher Deckel 24 zur Abdichtung der unteren Serviceöffnung 23 für den zweiten Bürstenhalter angeordnet, so dass die Stromversorgung des Motors 50 wie üblich über zwei um 180 ° versetzte Bürsten gesichert ist.

In Figur 2 ist der Winkelschleifer 10 ohne bzw. mit geöffnetem Deckel 24 von oben mit Ansicht der Serviceöffnung 23 gezeigt, wobei die Einzelheiten gemäß Figur 1 und darüber hinaus ein Bürstenhalter 28 und ein Schraubdom 32 erkennbar sind. Diese sind auf der Unterseite des Motorgehäuses 16 in gleicher Ausgestaltung vorhanden und in den nachfolgenden Figuren noch deutlicher dargestellt.

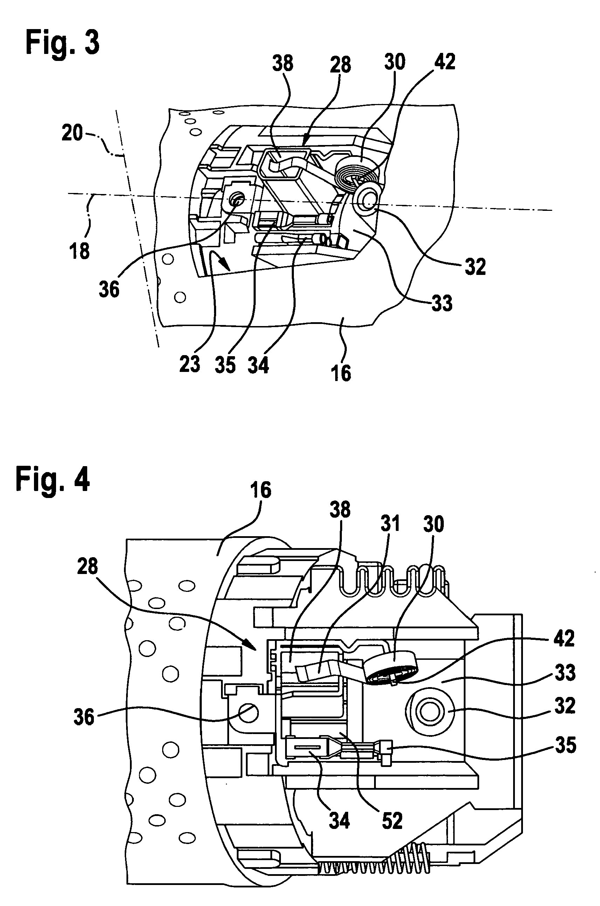

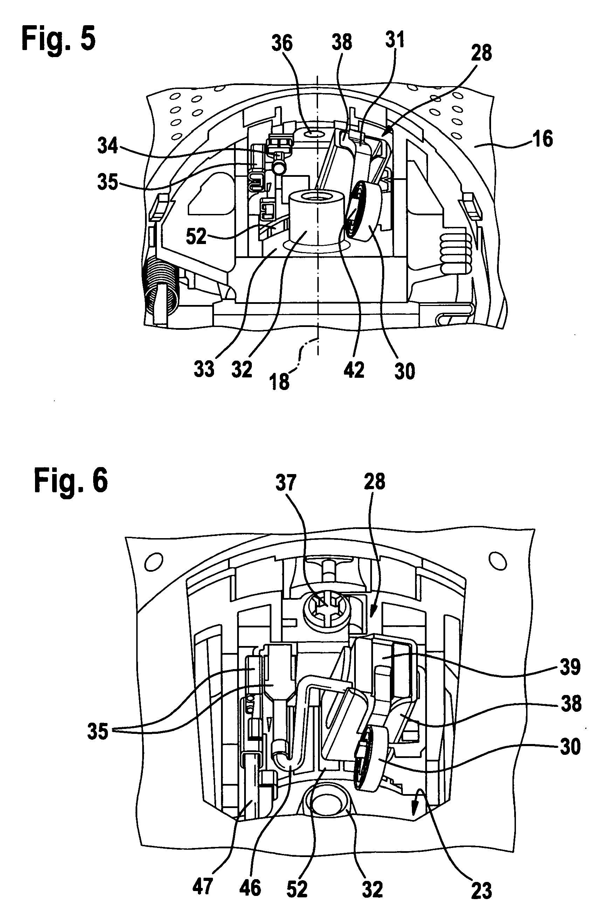

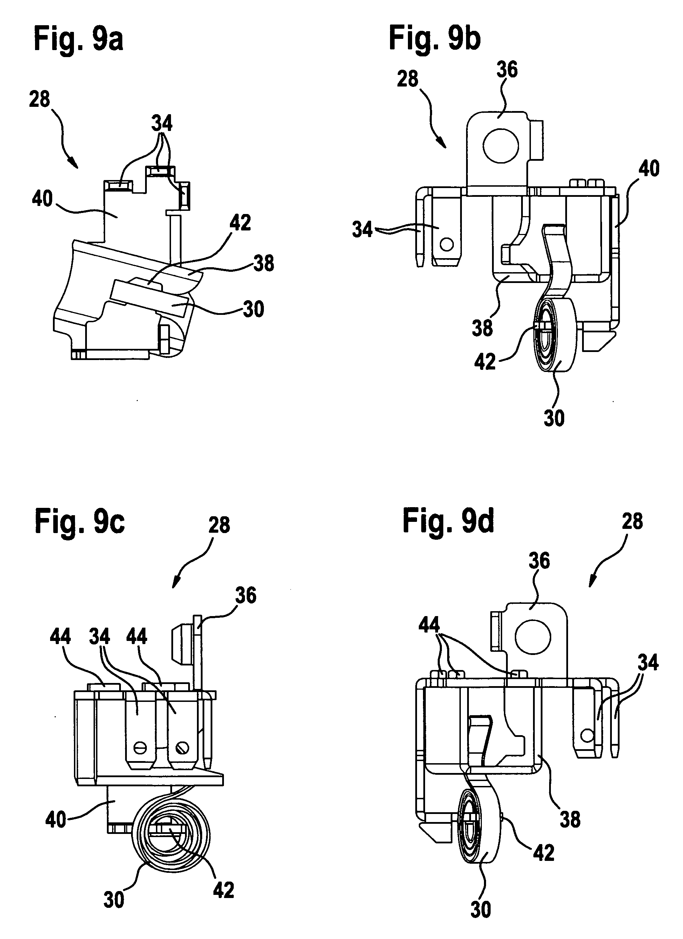

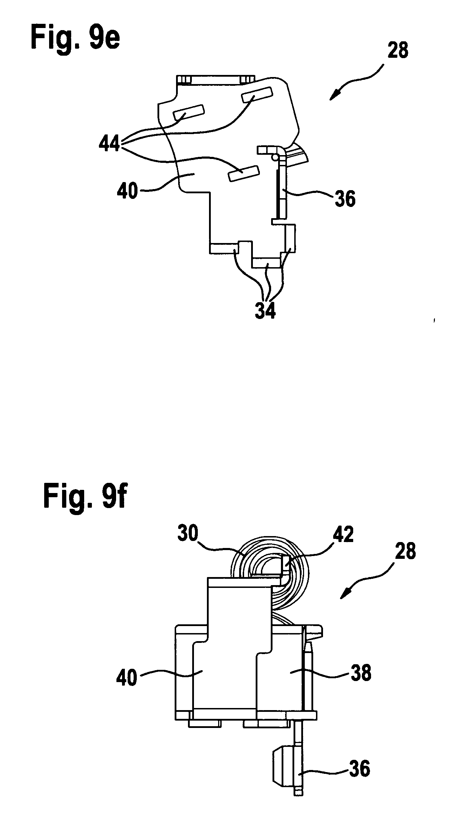

Eine in Figur 3 dargestellte vergrößerte Seitenansicht des Motorgehäuses 16 mit der offenen Serviceöffnung 23 nach Figur 2 zeigt den Bürstenhalter 28 mit einer dahinter aneordneten Feder 30, die auf einer Federachse 42 sitzt, die durch eine Ausprägung eines Trägerblechs 40, Fig. 9, gebildet wird. Die Feder 30 greift mit einem parallel zur Längsachse 18 nach vorn weisenden Federarm 31 mittig von oben in einen Schacht 38, der als Längsführung einer Bürste bzw. Kohle 39 dient. Eine aus dem Trägerblech 40 herausgebogene Öse 36 des Bürstenhalters 28 ist mittels einer nicht dargestellten Schraube oder mittels Überrastnocken am Motorgehäuse 16 fixiert. Ein senkrecht bzw. parallel zur Hochachse 20 aus einer Rippe 33 des Motorgehäuses 16 ragender Schraubdom 32 dient zum Eingriff der Deckelschraube 25 zur konturbündigen, abdichtenden Befestigung des Deckels 24 (Fig. 1) am Motorgehäuse 16. Dabei ist die Feder 30 seitlich in einem Abstand zum Schraubdom 32 angeordnet. Weiter sind Steckzungen 34 mit daran sitzenden Kabelklemmen 35 für ein Bürstenkabel 46 (Fig. 6) erkennbar.

Eine in Figur 4 dargestellte vergrößerte Draufsicht des geöffneten Motorgehäuses 16 mit einer Variante des erfindungsgemäßen Bürstenhalters 28 zeigt dessen mittige Befestigung mittels Öse 36 im Motorgehäuse 16 und den aus der Mitte versetzten Schacht 38 des Bürstenhalters 28 mit der auf der Federachse 42 sitzenden, schief angeordneten Feder 30 und dem Federarm 31 ohne Bürste mit dem darunter erkennbaren Kollektor 52 sowie den Schraubdom 32. Weiter ist eine Steckzunge 34 mit einer Kabelklemme 35 eines nichtdargestellten Bürstenkabels als Bestandteil des Bürstenhalters 28 erkennbar.

Eine in Figur 5 dargestellte, vergrößerte Hinteransicht nach Figur 3 zeigt den Blick auf das geöffnete Motorgehäuse 16 mit der quer angeordneten Rippe 33, die den Schraubdom 32 zum Fixieren des Deckels 24 (Fig. 1) trägt. Weiter ist die Anordnung des Bürstenhalters 28 gezeigt, d.h. dessen mittige Befestigung mittels Öse 36 im Motorgehäuse 16 und den aus der Mitte versetzten, in senkrechter Projektion zu Längsachse 18 aufgerichteten Schacht 38 des Bürstenhalters 28 mit der auf der Federachse 42 sitzenden Feder 30 und dem Federarm 31 ohne Bürste mit dem darunter erkennbaren Kollektor 52. Weiter sind zwei Steckzungen 34 mit je einer Kabelklemme 35 eines nichtdargestellten Bürstenkabels als Bestandteil des Bürstenhalters 28 erkennbar.

Die in Figur 6 dargestellte, vergrößerte Hinteransicht ähnlich Figur 3 zeigt im Unterschied zu Figur 5 die Serviceöffnung 23 mit einem an den Bürstenhalter 28 angeschlossenen, mehrfach gebogenen Bürstenkabel 46 und einem geraden Bürstenkabel 47 mit Kabelklemmen 35, weiter eine im Schach 38 steckende Bürste 39 und eine Schraube 37 zum Fixieren des Bürstenhalters 28 am Motorgehäuse 16.

Der in Figur 7 dargestellte Querschnitt des Motorgehäuses 16 mit Kollektor 52 und Bürstenhalter 28 nach Figur 2 zeigt deutlich die von der Hochachse 20 um winkelversetzte, radial zur Längsachse 18 ausgerichtete Anordnung des Schachts 38 des Bürstenhalters 28, dessen Querachse 22 und die Steckzungen 34 sowie die Schraube 37.

Die in Figur 8 dargestellte eine Variante einer Seitenansicht der offenen Serviceöffnung gemäß Fig. 2 aus einem weiteren Betrachtungswinkel verdeutlicht nochmals den Bürstenhalter 28 als Blechkonstruktion sowie die zuvor genannten Einzelheiten, ohne diese nochmals einzeln aufzuführen.

Der in den Figuren 9a bis 9g in seinen sechs 90°-Seitenprojektionen und in einer perspektivischen Ansicht.als Einzelheit dargestellte Bürstenhalter 28 mit Feder 30 ist als Blechkonstruktion ausgeführt, wobei ein Trägerblech 40 mehrfach abgewinkelt bzw. gestanzt ist und ich einer Krimpverbindung das u-förmig gebogene Blech des Schachts 38 aufnimmt.

Abgewinkelte Endbereiche des Trägerblechs 40 bilden dabei einstückig die Federachse 42, die Steckzungen 34 und die Öse 36.

Der Bürstenhalter 28 kann auch aus Kunststoff mit eingelegten elektrischen Leitungsbahnen ausgeführt sein.

Statt der als Winkelschleifer beschriebenen Handwerkzeugmaschine kann auch eine Handbohrmaschine, Schaber, Exzenterschleifer, Stichsäge usw. mit einem als Handgriff gestalteten Motorgehäuse mit dem erfindungsgemäßen Bürstenhalter, mit oder ohne Serviceöffnung und Deckel, ausgestattet sein.

## Patentansprüche

1. Handwerkzeugmaschine (10) mit einem länglichen, insbesondere als Handgriff dienenden, Motorgehäuse (16), das einen elektrischen Kollektormotor (50) aufnimmt, wobei die Bürsten (39) federbeaufschlagt in einem Bürstenhalter (28) mit Bürstenschacht (38) gelagert sind, der allein/einzeln im Motorgehäuse (16) fixiert ist, dem ein Achskreuz zuordenbar ist, insbesondere eine Längs-(18) eine Hoch- (20) und eine Querachse (22), **dadurch gekennzeichnet, dass** der Schacht (38) des Bürstenhalters (28) gegenüber der Hochachse (20) des Motorgehäuses (16) um einen Winkel von ca. 20° seitlich versetzt angeordnet ist, insbesondere radial zur Längsachse (18) ausgerichtet.

2. Handwerkzeugmaschine nach Anspruch 1, **dadurch gekennzeichnet, dass** zwei singuläre Bürstenhalter (28) einander diametral gegenüberliegend am Motorgehäuse (16) angeordnet sind.

3. Handwerkzeugmaschine nach Anspruch 1 oder 2, **dadurch gekennzeichnet, dass** beide Schächte (38) der Bürstenhalter (28) um gleiche Winkel in gleicher Richtung zur Hochachse (20) versetzt angeordnet sind.

4. Handwerkzeugmaschine nach Anspruch 1, **dadurch gekennzeichnet, dass** eine am Bürstenhalter (28) sitzende Spiralfeder (30) mit einem Federarm (31) zur Federbeaufschlagung der Bürste (39) dient und dass eine von der Spiralfeder (30) gebildete Mittenebene im wesentlichen parallel zur Längsachse (18) verläuft.

5. Handwerkzeugmaschine nach Anspruch 4, **dadurch gekennzeichnet, dass** die von der Spiralfeder (30) gebildete Mittenebene gegenüber dem Schacht (38) seitlich geneigt angeordnet ist und dass die Spiralfeder (30) neben dem Schraubdom (32) sitzt.

6. Handwerkzeugmaschine nach Anspruch 5, **dadurch gekennzeichnet, dass** der Bürstenhalter (28) mit mindestens einer Steckzunge (34) zum Anschluss eines Bürstenkabels (46) versehen ist, wobei jede der Steckzungen (34) einen elektrischen Sicherheits-Mindestabstand, vorzugsweise von 8 mm zur Serviceöffnung (23), zur Öse (36) sowie zum Schraubdom (32) hat.

7. Handwerkzeugmaschine nach Anspruch 5, **dadurch gekennzeichnet, dass** der Bürstenhalter (28) aus dem gemeinsamen, ebenen Trägerblech (40) herausgebogene Steckzungen (34) hat, wobei zwei in vertikaler und eine in horizontaler Ebene verlaufen.

8. Handwerkzeugmaschine nach Anspruch 5, **dadurch gekennzeichnet, dass** der Bürstenhalter (28) eine aus dem Trägerblech (40) abgewinkelte Öse (36) zum Fixieren des Bürstenhalters (28), insbesondere zum Anschrauben, am Motorgehäuse (16) hat.

9. Handwerkzeugmaschine nach Anspruch 5, **dadurch gekennzeichnet, dass** der Schraubdom (32) für die Fixierung eines die Serviceöffnung (23) schließenden Deckels (24) auf der Oberseite des Motorgehäuses (16), insbesondere auf einer Rippe (33) zentrisch und in einem elektrischen Sicherheits-Mindestabstand, vorzugsweise von 8 mm, zu stromführenden Teilen des Bürstenhalters (28) angeordnet ist.

10. Handwerkzeugmaschine nach einem der vorhergehenden Ansprüche, **dadurch gekennzeichnet, dass** der Bürstenhalter (28) Metallblech besteht, insbesondere aus einem mehrfach abgewinkelten Trägerblech (40), an den der Schacht (28) als u-förmig gebogenes Blechstück befestigbar ist, insbesondere über eine Krimpverbindung.

## Claims

1. Hand power tool (10) with an elongate motor housing (16) which serves particularly as a handle and which receives an electric collector motor (50), the brushes (39) being mounted, spring-loaded, in a brush holder (28) with brush well (38), which is fixed alone/individually in the motor housing (16) to which an axis cross can be assigned, in particular a longitudinal (18), vertical (20) and transverse (22) axis, **characterized in that** the well (38) of the brush holder (28) is arranged so as to be offset laterally by an angle of approximately 20° with respect to the vertical axis (20) of the motor housing (16), in particular is oriented radially with respect to the longitudinal axis (18).

2. Hand power tool according to Claim 1, **characterized in that** two singular brush holders (28) are arranged diametrically opposite one another on the motor housing (16).

3. Hand power tool according to Claim 1 or 2, **characterized in that** the two wells (38) of the brush holders (28) are arranged so as to be offset by equal angles in the same direction with respect to the vertical axis (20).

4. Hand power tool according to Claim 1, **characterized in that** a coil spring (30) seated on the brush holder (28) and having a spring arm (31) serves for the spring-loading of the brush (39), and **in that** a mid-plane formed by the coil spring (30) runs essentially parallel to the longitudinal axis (18).

5. Hand power tool according to Claim 4, **characterized in that** the mid-plane formed by the coil spring (30) is arranged so as to be inclined laterally with respect to the well (38), and **in that** the coil spring (30) is seated next to the screw cap (32).

6. Hand power tool according to Claim 5, **characterized in that** the brush holder (28) is provided with at least one plug tongue (34) for connecting a brush cable (46), each of the plug tongues (34) being at a minimum electrical safety distance, preferably of 8 mm, from the service port (23), from the lug (36) and from the screw cap (32).

7. Hand power tool according to Claim 5, **characterized in that** the brush holder (28) has plug tongues (34) bent out from the common planar carrier sheet (40), two of the said plug tongues running in a vertical plane and one in a horizontal plane.

8. Hand power tool according to Claim 5, **characterized in that** the brush holder (28) has a lug (36), angled out of the carrier sheet (40), for fixing, in particular screwing, the brush holder (28) to the motor housing (16).

9. Hand power tool according to Claim 5, **characterized in that** the screw cap (32) for fixing a lid (24), closing the service port (23) on the top side of the motor housing (16), in particular on a rib (33), is arranged centrically and at a minimum electrical safety distance, preferably of 8 mm, from live parts of the brush holder (28).

10. Hand power tool according to one of the preceding claims, **characterized in that** the brush holder (28) consists of sheet metal, in particular of a multiply angled carrier sheet (40), to which the well (28) can be fastened as a sheet metal piece bent in a u-shaped manner, in particular via a crimp connection.

## Revendications

1. Machine-outil portative (10) comprenant un boîtier de moteur (16) allongé, servant notamment de poignée, qui reçoit un moteur à collecteur électrique (50), les balais (39) étant montés de manière sollicitée par ressort dans un porte-balais (28) avec logement de balais (38), lequel est fixé isolément/individuellement dans le boîtier de moteur (16), auquel un croisement d'axe peut être associé, notamment un axe longitudinal (18), un axe vertical (20) et un axe transversal (22), **caractérisée en ce que** le logement (38) du porte-balais (28) est disposé de manière décalée d'un angle d'environ 20° latéralement par rapport à l'axe vertical (20) du boîtier de moteur (16), en particulier est orienté radialement par rapport à l'axe longitudinal (18).

2. Machine-outil portative selon la revendication 1, **caractérisée en ce que** deux porte-balais (28) individuels sont disposés de manière diamétralement opposée l'un à l'autre sur le boîtier de moteur (16).

3. Machine-outil portative selon la revendication 1 ou 2, **caractérisée en ce que** les deux logements (38) des porte-balais (28) sont disposés de manière décalée suivant le même angle dans la même direction par rapport à l'axe vertical (20).

4. Machine-outil portative selon la revendication 1, **caractérisée en ce qu'**un ressort spiral (30) reposant sur le porte-balais (28), avec un bras de ressort (31), sert à la sollicitation par ressort des balais (39) et **en ce qu'**un plan médian formé par le ressort spiral (30) s'étend essentiellement parallèlement à l'axe longitudinal (18).

5. Machine-outil portative selon la revendication 4, **caractérisée en ce que** le plan médian formé par le ressort spiral (30) est disposé de manière inclinée latéralement par rapport au logement (38) et **en ce que** le ressort spiral (30) repose à côté du mandrin fileté (32).

6. Machine-outil portative selon la revendication 5, **caractérisée en ce que** le porte-balais (28) est pourvu d'au moins une langue d'enfichage (34) pour le raccordement d'un câble de balais (46), chacune des langues d'enfichage (34) ayant une distance minimale de sécurité électrique, de préférence de 8 mm, à l'ouverture de service (23), à l'oeillet (36) ainsi qu'au mandrin fileté (32).

7. Machine-outil portative selon la revendication 5, **caractérisée en ce que** le porte-balais (28) a des langues d'enfichage (34) cintrées hors de la tôle de support plane commune (40), deux s'étendant dans le plan vertical et deux dans le plan horizontal.

8. Machine-outil portative selon la revendication 5, **caractérisée en ce que** le porte-balais (28) a un oeillet coudé (36) sortant de la tôle de support (40), pour la fixation du porte-balais (28), en particulier par vissage, au boîtier de moteur (16).

9. Machine-outil portative selon la revendication 5, **caractérisée en ce que** le mandrin fileté (32), pour la fixation d'un couvercle (24) fermant l'ouverture de service (23), est disposé sur le côté supérieur du boîtier de moteur (16), en particulier sur une nervure (33) centralement et à une distance minimale de sécurité électrique, de préférence de 8 mm, des pièces conduisant l'électricité du porte-balais (28).

10. Machine-outil portative selon l'une quelconque des revendications précédentes, **caractérisée en ce que** le porte-balais (28) se compose de tôle métallique, notamment d'une tôle de support (40) coudée plusieurs fois, sur laquelle peut être fixé le logement (28) sous forme de pièce en tôle cintrée en forme de U, notamment par le biais d'une connexion sertie.
